# EUROPÄISCHE PATENTSCHRIFT

(11) **EP 1 682 402 B1**
(45) Veröffentlichungstag und Bekanntmachung des Hinweises auf die Patenterteilung: **07.05.2008**
(21) Anmeldenummer: 04765129.4
(22) Anmeldetag: 13.09.2004
(51) Int. Cl.: B62D 29/00, B62D 27/02, B21D 26/02

(54) **TR GERBAUTEIL SOWIE VERFAHREN ZU DESSEN HERSTELLUNG**
STRUCTURAL COMPONENT AND METHOD FOR PRODUCING THE SAME
COMPOSANT DE SUPPORT ET PROCEDE DE PRODUCTION ASSOCIE

(30) Priorität: 27.10.2003 DE 10350231
(43) Veröffentlichungstag der Anmeldung: 26.07.2006
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2004/010207
(87) Internationale Veröffentlichungsnummer: WO 2005/051746

(56) Entgegenhaltungen:
- WO-A-03/000441
- DE-A- 10 130 197
- DE-C- 10 141 503
- US-A1- 2002 073 526

## Beschreibung

Die Erfindung bezieht sich auf ein Trägerbauteil. Derartige Trägerbauteile dienen zur Stabilisierung von mechanischen Konstruktionen jeglicher Art. Trägerbauteile finden insbesondere Anwendung im Fahrzeugbau. Die Erfindung bezieht sich weiterhin auf ein Verfahren zur Herstellung des Trägerbauteils.

Herkömmliche Trägerbauteile sind häufig als Profilteile mit einer ein- oder mehrfach abgewinkelten Profilform ausgeführt. Je nach Form der Profilfläche unterscheidet man T-Träger, Doppel-T-Träger, U-Träger, etc. Solche Träger werden üblicherweise, z.B. durch Extrusionsverfahren oder Profilwalzen einstückig hergestellt oder aus mehreren Blechteilen, insbesondere durch Schweißverbindungen, kombiniert.

Aus der WO 03/00041 A1 ist beispielsweise ein Verfahren zur Herstellung eines rohrförmigen und räumlich gebogenen Strukturteils aus einem Strangpressprofil nach dem Oberbegriff des Anspruchs 1 bekannt.

Von zunehmender Bedeutung in der modernen Konstruktionstechnik, insbesondere im Fahrzeugbau, ist die Gewichtseinsparung bei einer Konstruktion, ohne dass dies zu Lasten der Stabilität geht. In diesem Zusammenhang ist die Realisierung eines leichten, aber dennoch stabilen Trägerbauteils wünschenswert. Zur Gewichtseinsparung ist es bei der Konzeption eines Trägerbauteils üblich, durch Variation der Profilhöhe das Trägerbauteil in Bezug auf Stabilität und Gewicht bedarfsangepasst zu optimieren. Des Weiteren werden zur Gewichtseinsparung zunehmend durchbrochene Blechteile, insbesondere Lochbleche, als Bestandteile eines Trägerbauteils verwendet. Eine weitere Methode zur Gewichtseinsparung besteht in der integrierung von Teilen mit geringem spezifischem Gewicht, insbesondere Kunststoffteilen, in einem Trägerbauteil. Solche Träger, die aus Bestandteilen unterschiedlichen Materials, insbesondere Metall und Kunststoff, bestehen, werden auch als Hybridträger bezeichnet.

Die Herstellung eines stabilen, aus mehreren Bestandteilen zusammengesetzten Trägerbauteils ist jedoch in der Regel vergleichsweise aufwendig, insbesondere dann, wenn die Profilhöhe in Profillängsrichtung variiert, oder Bestandteile mit vergleichsweise geringer mechanischer oder thermischer Belastbarkeit, insbesondere Lochbleche oder Kunststoffteile, verwendet werden.

Der Erfindung liegt daher die Aufgabe zugrunde, ein einfach zu realisierendes Trägerbauteil mit hoher Stabilität und geringem Gewicht anzugeben. Die Form des Trägerbauteils soll insbesondere auf einfache Weise flexibel anpassbar sein. Der Erfindung liegt des Weiteren die Aufgabe zugrunde, ein einfaches Herstellungsverfahren für einen solchen Träger anzugeben.

Bezüglich des Trägerbauteils wird die Aufgabe erfindungsgemäß gelöst durch die Merkmale des Anspruchs 1. Danach ist das Trägerbauteil aus einem Hohlprofilteil und einem Blechteil zusammengesetzt. Das Hohlprofilteil ist hierbei derart umgeformt, dass ein Umfangsbereich des Hohlprofilteils an einem Querrand des Blechteils kraftschlüssig und/oder formschlüssig an- oder einliegt.

Das erfindungsgemäße Trägerbauteil ist mit verhältnismäßig geringem Aufwand herstellbar, zumal sich Hohlprofilteile insbesondere unter Anwendung von Fluiddruckverfahren mit vergleichsweise geringem Aufwand in quasi beliebiger Weise verformen lassen. Die erfindungsgemäße Verbindungstechnik erlaubt es, das Material des Blechteils weitgehend frei nach Bedarf auszuwählen. Der Begriff Blech umfasst in diesem Zusammenhang sowohl Metallblech als auch blechartige, flächige Strukturen aus anderem Material. Das Blechteil ist beispielsweise ein Stegblech oder ein sonstiger Formkörper aus Metall, Kunststoff oder Keramik, ein Strangpress- oder Walzprofil, ein Umformteil oder ein Schaummetallteil. Auch das Material des Hohlprofilteils kann unter der Bedingung, dass das Hohlprofilteil plastisch verformbar sein muss, frei gewählt werden. Insbesondere ist das Hohlprofilteil ein Rohr oder Strangpressprofil aus Metall, Kunststoff, Pulvermetall oder Keramik. Das Trägerbauteil kann dadurch hochflexibel an den speziellen Einsatzzweck angepasst werden.

Bei der Verbindung des Hohlprofilteils mit dem Blechteil bleiben zudem vorteilhafterweise die Oberflächen sowohl des Hohlprofilteils als auch des Blechteils intakt. Hierdurch wird eine besonders gute Korrosionsbeständigkeit erzielt. Zudem bleibt das Hohlprofilteil auch nach der Umformung vollständig fluiddicht, so dass das Trägerbauteil bei Bedarf gleichzeitig zur Fluidleitung herangezogen werden kann.

Ein zentraler Vorteil des Trägerbauteils besteht darin, dass infolge der Verwendung des Hohlprofilteils in Verbindung mit dem Blechteil eine sehr gute Biegesteifigkeit und Torsionssteifigkeit bei gleichzeitig äußerst geringem Gewicht erzielt wird.

In einer vorteilhaften Ausführung der Erfindung wird die Verbindung zwischen dem Hohlprofilteil und dem Blechteil dadurch erzielt, dass der Umfangsbereich des Hohlprofilteils im Querschnitt etwa U-förmig um den Querrand herumgebogen ist, so dass der Querrand des Blechteils von drei Seiten von dem Umfangsbereich des Hohlprofilteils klammerartig umfasst ist.

In einer Variante der Erfindung, die quasi die Umkehrung des vorstehend beschriebenen Prinzips darstellt, liegt das Hohlprofilteil in einer Ausformung des Querrands des Blechteils ein, die wiederum im Querschnitt etwa U-förmig ist und das Hohlprofilteil nach Art einer Klammer hält.

Das Blechteil ist hierbei wahlweise entweder innerhalb des Hohlprofilteils oder außerhalb des Hohlprofilteils angeordnet. Die erstere Variante hat den Vorteil einer vergleichsweise hohen Stabilität bei äußerst kompakter Größe. Sie ist daher vor allem bei beengten Platzverhältnissen zu bevorzugen. Die zweite Variante ist insbesondere zur Realisierung einer großen Profilhöhe vorteilhaft.

Zur Erzielung einer besonders festen Verbindung ist das Hohlprofilbauteil mit dem Blechteil vorzugsweise formschlüssig verbunden. Zu diesem Zweck ist der Querrand des Blechteils mit mindestens einer Vertiefung versehen, in die ein Vorsprung des Hohlprofilteils eingreift. Eine solche Vertiefung ist insbesondere als Nut oder Sicke in eine oder beide Blechflächen des Blechteils eingebracht. Alternativ sind zur Erzielung des gleichen Zwecks entlang des Querrands des Blechteils ein oder mehrere Durchbrüche in das Blechteil eingebracht. Um zu verhindern, dass das Hohlprofilteil gegenüber dem Blechteil in Profillängsrichtung verrutscht, ist das Blechteil zusätzlich oder alternativ mit mindestens einer Vertiefung in Form eines in den Querrand eingebrachten Einschnitts versehen. Verschiedene Formen solcher Vertiefungen können auch an einem Blechteil kombiniert sein.

In Umkehrung des vorstehend beschriebenen Gedankens ist alternativ der Querrand des Blechteils mit einem Vorsprung versehen, der in die Wand des Hohlprofilbauteils eingreift. Hierdurch wird wiederum eine formschlüssige Verbindung des Hohlprofilbauteils mit dem Blechteil erzielt. Dieser Vorsprung ist insbesondere zweckmäßigerweise nach Art einer Rippe oder einer Noppe ausgebildet. Optional läuft der Vorsprung spitz aus, wodurch er sich beim Umformen des Hohlprofilteils in dessen Wand hineinbohrt.

Zur weiteren Gewichtseinsparung ist ein zwischen den beiden Querrändern gelegener zentraler Bereich des Blechteils bevorzugt mit mindestens einem Durchbruch versehen.

Das erfindungsgemäße Konzept lässt sich insbesondere leicht auf ein Trägerbauteil mit mehr als zwei Bestandteilen ausweiten. So ist in der erfindungsgemäßen Ausführung an jedem Querrand des Blechteils je ein Hohlprofilteil vorgesehen. Es ergibt sich somit ein Trägerbauteil, das funktionell einem Doppel-T-Träger ähnelt, und das insofern die vorteilhaften Eigenschaften eines Doppel-T-Trägers in Bezug auf dessen hohe Biegesteifigkeit teilt. Ebenso ist es jedoch auch möglich, zwei Blechteile mit einem Hohlprofilteil zu verbinden, so dass man zunächst eine im Querschnitt uhrzeigerartige Konstruktion erhält. In Weiterführung dieses Gedankens lassen sich grundsätzlich beliebig viele Hohlprofilteile und Blechteile alternierend oder sternförmig aneinander anbauen, so dass auch komplexe Trägerformen realisierbar sind.

Im Hinblick auf eine weitere Gewichtseinsparung und thermische Trennung ist das Blechteil bevorzugt aus Kunststoff. Insbesondere in Verbindung mit Hohlprofilteilen aus Metallblech ergibt sich somit ein leichter und hochstabiler Hybridträger.

Hergestellt wird das Hohlprofilteil durch hydrostatischen Druck eines Fluids, welches das Hohlprofilteil ausfüllt oder umgibt, und derart verformt, dass sich ein Umfangsbereich des Hohlprofilteils mit dem Querrand des Blechteils kraftschlüssig und/oder formschlüssig verkrallt.

Das Verfahren baut hierbei auf einer an sich bekannten Technik zur Verformung von Hohlkörpern durch Innendruck auf, die auch als "Hydro-Forming" bezeichnet wird. Ein derartiges Verfahren ist z. B. aus der DE 102 11 092 A1 bekannt.

In einer Ausführung des Verfahrens wird entweder das Hohlprofilteil derart umgeformt, dass der Umfangsbereich etwa U-förmig um den Querrand herumgebogen wird. Das Hohlprofilteil kann hierbei je nach Bedarf durch Umspülung mit dem Druckfluid komprimiert, oder durch Füllung mit dem Druckfluid aufgeweitet werden. In einer alternativen Ausführung des Verfahrens wird das Hohlprofilteil wird durch Applikation von Innendruck derart erweitert, dass es in eine etwa U-förmige Ausformung des Blechteils eingeformt wird.

Ist das Hohlprofilteil aus einem Material, das bereits bei Raumtemperatur plastisch verformbar ist, z. B. Metall, so wird das Verfahren bevorzugt bei Raumtemperatur durchgeführt. Ist dagegen das Hohlprofilteil aus einem Material, das erst bei einer erhöhten Temperatur plastisch wird, insbesondere Kunststoff- und Glasmaterial, so wird das Verfahren bevorzugt in einem entsprechend erhöhten Temperaturbereich durchgeführt. Die Verfahrenstemperatur ist jedoch bevorzugt stets so niedrig gewählt, dass das Material des Hohlprofilteils nicht aufschmilzt. Dadurch bleibt, im Gegensatz zu einer Schweißverbindung, die Oberfläche des Hohlprofilteils intakt.

Nachfolgend werden Ausführungsbeispiele der Erfindung anhand einer Zeichnung näher erläutert. Darin zeigen:
- Fig. 1: in einer Explosionsdarstellung zwei Hohlprofilteile und ein Blechteil als Bestandteile eines Trägerbauteils,
- Fig. 2: in perspektivischer Ansicht das aus den Hohlprofilteilen und dem Blechteil gemäß Fig. 1 bestehende Trägerbauteil nach dessen Fertigstellung,
- Fig. 3 bis 5: in schematischem Querschnitt die Herstellung des Trägerbauteils gemäß Fig. 2 zu drei aufeinander folgenden Verfahrenszeitpunkten,
- Fig. 6 bis 7: in vergrößertem Querschnitt ausschnittsweise Varianten des Trägerbauteils gemäß Fig. 2,
- Fig. 8 bis 10: in schematischem Querschnitt eine alternative Herstellung des Trägerbauteils gemäß Fig. 2 zu drei aufeinanderfolgenden Verfahrenszeitpunkten,
- Fig. 11: in vergrößertem Querschnitt ausschnittsweise eine weitere Variante des Trägerbauteils gemäß Fig. 2,
- Fig. 12: in einer quer geschnittenen Detailansicht einen Querrand des Blechteils sowie einen diesen umschließenden Umfangsbereich des anliegenden Hohlprofilteils,
- Fig. 13: in einer Darstellung gemäß Fig. 12 eine alternative Ausführung des Querrands,
- Fig. 14 bis 15: in schematischem Längsschnitt den Querrand des Blechteils sowie den daran anliegenden Bereich des korrespondierenden Hohlprofilteils,
- Fig. 16: in einer Darstellung gemäß Fig. 12 eine alternative Ausführung des Blechteils sowie des Umfangsbereichs des Hohlprofilteils,
- Fig. 17 und 18: in einer Darstellung gemäß Fig. 13 weitere Ausführungsformen des Querrandes,
- Fig. 19: in Darstellung gemäß Fig. 1 zwei Hohlprofile und ein Blechteil als Bestandteile einer alternativen Ausführung des Trägerbauteils,
- Fig. 20: in einer Darstellung gemäß Fig. 2 das aus den Bestandteilen gemäß Fig. 19 hergestellte Trägerbauteil nach dessen Fertigstellung,
- Fig. 21 bis 23: in einer den Fig. 3 bis 5 entsprechenden Darstellung die Herstellung des Trägerbauteils gemäß Fig. 20 zu drei aufeinander folgenden Verfahrenszeitpunkten,
- Fig. 24 und 25: in schematischem Querschnitt alternative Ausführungen des Querrands des Blechteils,
- Fig. 26: in Darstellung gemäß Fig. 1 ein Hohlprofilteil und ein Blechteil als Bestandteile einer weiteren Ausführungsform des Trägerbauteils,
- Fig. 27: in Darstellung gemäß Fig. 2 das aus den Bestandteilen gemäß Fig. 26 bestehende Trägerbauteil nach dessen Fertigstellung, und
- Fig. 28 bis 30: in einer den Fig. 3 bis 5 entsprechenden Darstellung die Herstellung des Trägerbauteils gemäß Fig. 27 zu drei aufeinander folgenden Verfahrenszeitpunkten.
- Fig. 31: in schematischem Querschnitt eine alternative Herstellung des Trägerbauteils gemäß Fig. 27 zu einem Verfahrenspunkt, (links Werkzeug offen, rechts Werkzeug zu) und
- Fig. 32 und 33: in schematischem Querschnitt eine alternative Herstellung des Trägerbauteils gemäß Fig. 27 zu zwei aufeinanderfolgenden Verfahrenszeitpunkten

Einander entsprechende Teile und Größen sind in allen Figuren stets mit denselben Bezugszeichen versehen.

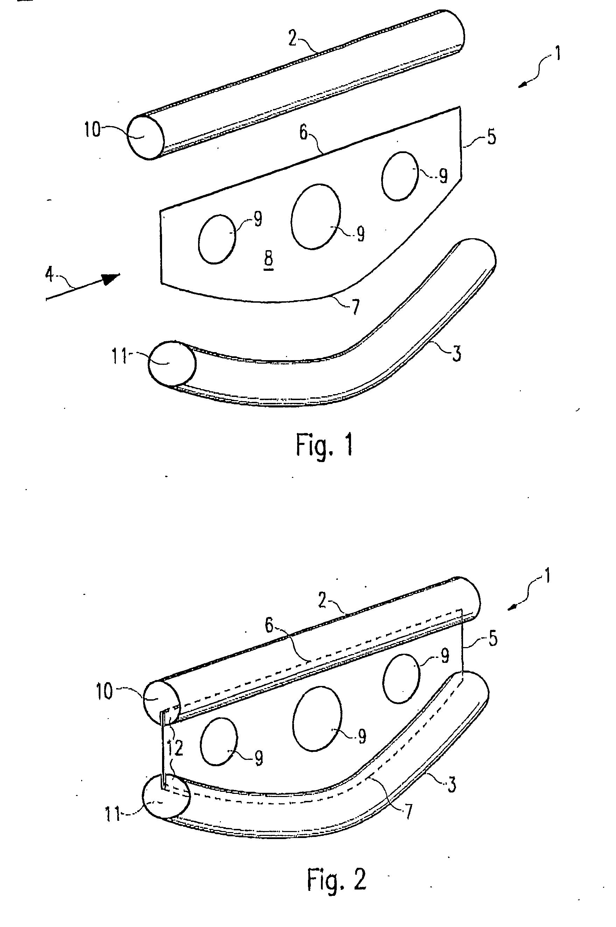

Fig. 1 zeigt die Bestandteile eines in Fig. 2 in fertiggestelltem Zustand dargestellten Trägerbauteils 1. Das Trägerbauteil 1 umfasst ein erstes Hohlprofilteil 2 in Form eines geraden Rohrs mit etwa kreisförmigem Querschnitt sowie ein zweites Hohlprofilteil 3, das die Form eines gebogenen Rohres aufweist. Das Trägerbauteil 1 umfasst des Weiteren ein entlang einer Profillängsrichtung 4 langgestrecktes Blechteil 5. Das Blechteil 5 ist an seiner, dem Hohlprofilteil 2 zugewandten Seite mit einem geradlinigen Querrand 6 versehen. Der gegenüberliegende, dem Hohlprofilteil 3 zugewandte Querrand 7 des Blechteils 5 ist in Anpassung an die Krümmung des Hohlprofilteils 3 gebogen. Der zwischen den Querrändern 6 und 7 angeordnete zentrale Bereich 8 des Blechteils 5 ist mit großflächigen Durchbrüchen 9 versehen, die zur Gewichtsreduzierung des Blechteils 5 dienen.

In fertiggestelltem Zustand gemäß Fig. 2 sind die Hohlprofilteile 2 und 3 derart an das Blechteil 5 herangeführt, dass der Querrand 6 in den Innenraum 10 des Hohlprofilteils 2 eintaucht, während der Querrand 7 in den Innenraum 11 des Hohlprofilteils 3 eintaucht. Jeder Querrand 6 bzw. 7 ist hierbei in einem Mantelbereich oder Umfangsbereich 12 des jeweiligen Hohlprofilteils 2 bzw. 3 aufgenommen, der nach Art einer Schlaufe in den jeweiligen Innenraum 10 bzw. 11 hineinragt. Der Umfangsbereich 12 umgibt den jeweiligen Querrand 6 bzw. 7 somit etwa U-förmig von drei Seiten und nimmt den Querrand 6 bzw. 7 nach Art einer Klammer unter Vorspannung in sich auf. Auf diese Weise sind die Hohlprofilteile 2 und 3 kraftschlüssig und, wie im Zusammenhang mit den folgenden Figuren näher beschrieben wird, vorzugsweise auch formschlüssig an dem Blechteil 5 befestigt.

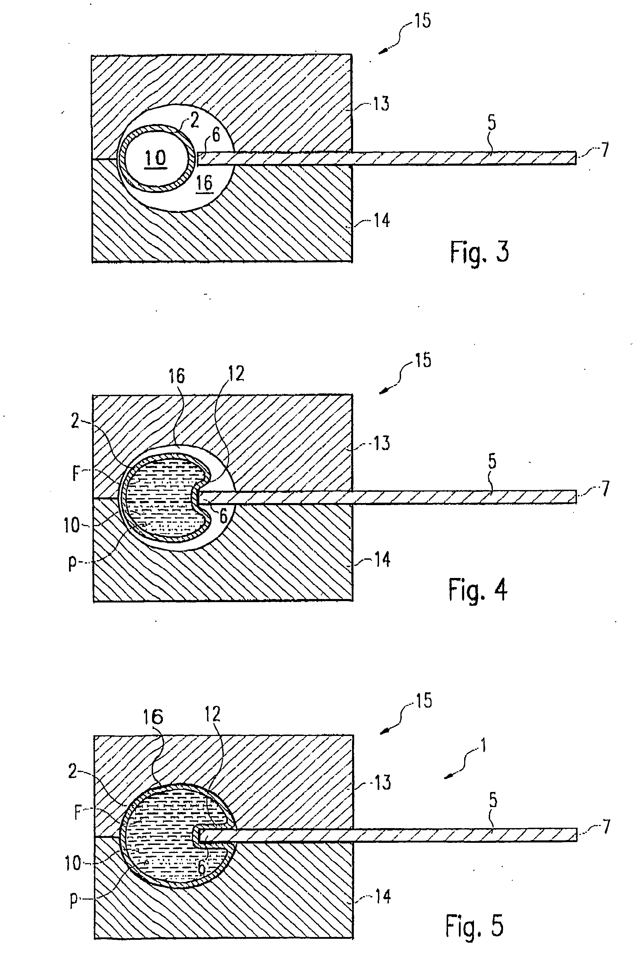

Die Herstellung des Trägerbauteils 1 gemäß Fig. 2 ist in den Fig. 3 bis 5 schematisch beschrieben. Gemäß Fig. 3 werden das Hohlprofilteil 2 und das Blechteil 5 zwischen zwei Halbstücke 13 und 14 eines Fügewerkzeugs 15 eingelegt. Die Halbstücke 13 und 14 dienen dabei als Matrize für das im Zuge des Herstellungsverfahrens verformte Hohlprofilteil 2. Sie bilden hierzu zwischen sich einen Hohlraum 16 aus, in dem das Hohlprofilteil 2 einliegt und dessen Wand die spätere Form des Hohlprofilteils 2 vorgibt. Der Querrand 6 des Blechteils 5 ragt in diesen Hohlraum 16 hinein.

Zur Verformung des Hohlprofilteils 2 wird gemäß Fig. 4 der Innenraum 10 des Hohlprofilteils 2 mit einem Fluid F, insbesondere einer ölartigen oder wässrigen Flüssigkeit, gefüllt. Das Fluid F wird anschließend unter einen hydrostatischen Druck p gesetzt, unter dessen Wirkung das Hohlprofilteil 2 aufgeweitet wird.

Im Zuge der zunehmenden Aufweitung des Hohlprofilteils 2 stößt das Hohlprofilteil 2 im Bereich des Umfangsbereichs 12 an den Querrand 6 und wird bei fortgesetzter Aufweitung an diesem Querrand 6 umgebogen. Die Aufweitung des Hohlprofilteils 2 wird so lange fortgeführt, bis es den Hohlraum 16 vollständig ausfüllt. Dabei legt sich der Umfangsbereich 12 dicht an den Querrand 6 des Blechteils 5 an, wodurch das Hohlprofilteil 2 kraftschlüssig oder sogar formschlüssig am Blechteil 5 befestigt wird. Die Umformung des Hohlprofilteils 2 wird optional durch eine auf das Hohlprofilteil 2 hin ausgerichtete Bewegung des Blechteils 5 unterstützt. Durch entsprechende Strukturierung der Innenseiten der Halbstücke (13,14) kann die Oberfläche des Hohlprofilteiles zusätzlich mit Sicken oder anderen die Festigkeit und Steifigkeit steigernden Strukturen, z.B. Wölb- oder Beulstrukturen, versehen werden.

Abschließend wird das Fluid F aus dem Innenraum 10 entfernt und das zur Hälfte fertiggestellte Trägerbauteil 1 aus dem Fügewerkzeug 15 entnommen. Die Befestigung des zweiten Hohlprofilteils 3 am gegenüberliegenden Querrand 7 erfolgt in gleicher Weise nacheinander oder beide Profilverbindungen gleichzeitig in einem Arbeitsgang.

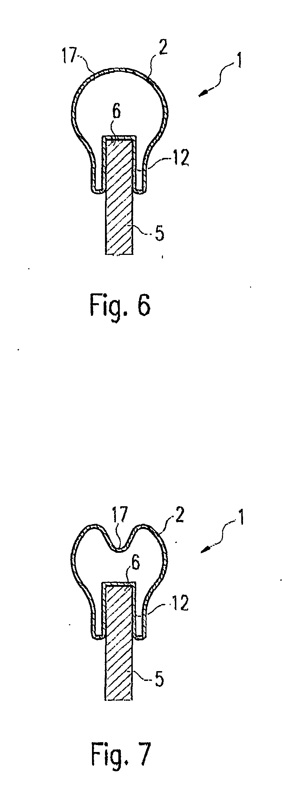

Durch geeignete Formgebung des Hohlraums 16 kann das Hohlprofilteil 2 in quasi beliebiger Weise verformt werden. Beispiele für Formvarianten des Hohlprofilteils 2 sind in den Fig. 6 und 7 gezeigt. Fig. 6 zeigt hierbei eine Variante, bei der das Hohlprofilteil 2 in dem an den Umfangsbereich 12 angrenzenden Bereich zu dünnen Hohlstegen ausgeformt ist, die den Querrand 6 flankieren. Das umgeformte Hohlprofilteil 2 weist somit im Profil einen etwa birnenartigen Umriss auf.

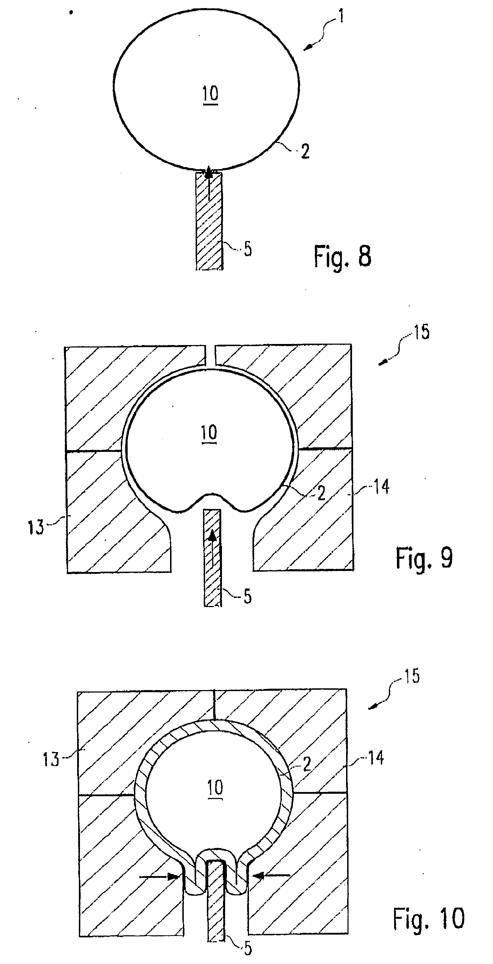

In der Ausführung gemäß Fig. 7 ist diese Form dahingehend modifiziert, dass das Freiende 17 des Hohlprofilteils 2 in Richtung des Querrands 6 eingedrückt ist. In der Ausführung gemäß Fig. 8 bis 10 ist die Herstellung des Trägerbauteils 1 gemäß Fig. 2 in einer weiteren Alternative schematisch beschrieben. Gemäß Fig. 8 wird das Hohlprofil 2 durch Eindrücken des Blechteils 5 vorgeformt. Anschließend wird gemäß Fig. 9 das Hohlprofilteil 2 mit dem teilweise eingefügten Blechteil 5 zwischen zwei Halbstücke 13 und 14 eines Fügewerkzeugs 15 eingelegt. Gemäß Fig. 10 wird dann der Steg oder das Blechteil 5 durch Zusammendrücken (mechanischen Druck) der beiden Halbstücke 13 und 14 im Hohlprofilteil 2 eingepresst. Zusätzlich kann durch Einfüllen eines Fluids F in den Innenraum 10 eine Verformung des Hohlprofilteils 2 unterstützt werden (Innendruck).

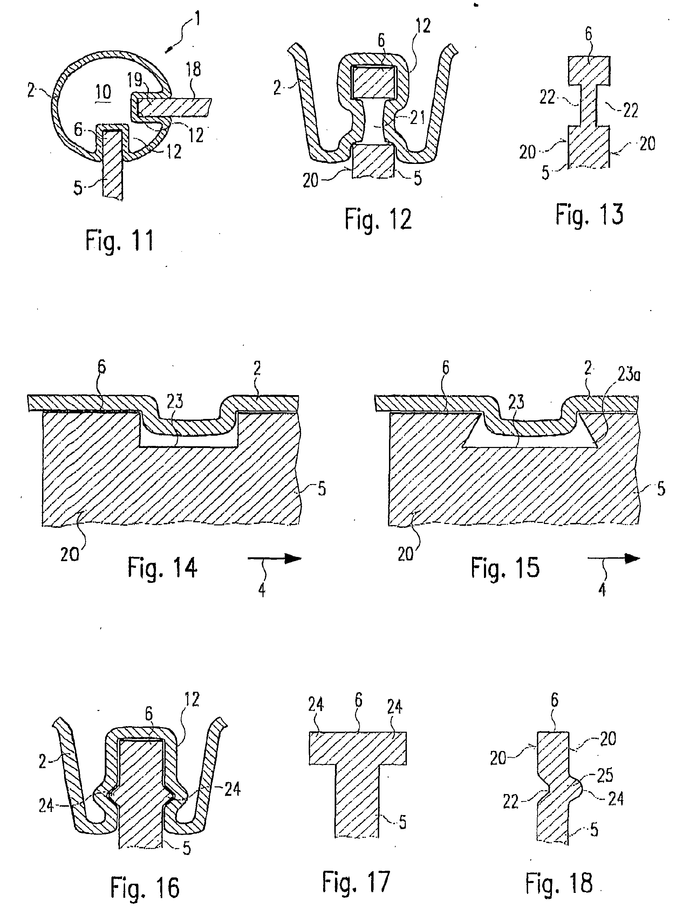

Fig. 11 zeigt eine Modifikation des Trägerbauteils 1, bei der ein zweites Blechteil 18 vorgesehen ist. Das zweite Blechteil 18 ist senkrecht bezüglich des Blechteils 5 orientiert und in Bezug zu diesem derart ausgerichtet, dass sein Querrand 19 in geringem Abstand parallel zum Querrand 6 verläuft. Das Hohlprofilteil 2 ist derart angeordnet, dass beide Querränder 6 und 19 in den Innenraum 10 eintauchen und von jeweils einem korrespondierenden Umfangsbereich 12 umfasst sind. Die Blechteile 5 und 18 sind somit über das Hohlprofilteil 2 miteinander verbunden.

In Weiterführung dieses Konstruktionsprinzips können quasi beliebig viele Blechteile in komplexer Weise miteinander verbunden werden, indem jeweils ihre angrenzenden Querränder gemeinsam durch ein verbindendes Hohlprofilteil eingefasst werden. Hierdurch lassen sich (in nicht näher dargestellter Weise) komplexe, vielteilige Trägerbauteile realisieren.

Um das Hohlprofilteil 2 nicht nur kraftschlüssig, sondern auch formschlüssig mit dem Blechteil 5 zu verbinden, ist letzteres gemäß den Fig. 12 bis 15 mit einer in eine oder beide Blechflächen 20 eingebrachten Vertiefung versehen, in welche beim Umformen Wandmaterial des Hohlprofilteils 2 eingedrückt wird. Gemäß Fig. 12 ist diese Vertiefung als Durchbruch 21 ausgeführt, der das Blechteil 5 im Bereich des Querrands 6 durchsetzt. Bevorzugt ist das Blechteil 5 mit einer Reihe solcher Durchbrüche 21 versehen, von denen in der Schnittzeichnung gemäß Fig. 12 nur eine erkennbar ist.

Gemäß Fig. 13 ist die Vertiefung als Nuten 22 ausgeführt, die beidseitig des Blechteils 5 in die Blechflächen 20 eingebracht sind und etwa in Richtung der Profillängsrichtung 4 (Fig. 1) verlaufen. Abweichend vom dargestellten Beispiel könnte die Nut 22 auch lediglich einseitig des Blechteils 5 eingebracht sein. Ferner können die Nuten in Profillängsrichtung unterbrochen sein oder mehrer Nuten sowohl in Nutrichtung als auch quer dazu versetzt zueinander angeordnet werden.

In einer weiteren Modifikation gemäß Fig. 14 ist die Vertiefung in Form eines Einschnitts 23 in den Querrand 6 des Blechteils 5 eingebracht. Der durch Eindringen des Materials des Hohlprofilteils 2 in den Einschnitt 23 hergestellte Formschluss verhindert insbesondere ein Verrutschen des Hohlprofilteils 2 gegenüber dem Blechteil 5 in Profillängsrichtung 4. Gemäß Fig. 15 ist in einer Modifikation des Einschnitts 23 dieser mit einem Hinterschnitt 23a versehen. Der Hinterschnitt 23a, z.B. ein spitzförmiger oder rechteckförmiger Hinterschnitt, verhindert ein axiales und senkrechtes Verschieben des Hohlprofilteils 2.

Anstelle einer Vertiefung kann das Blechteil 5 auch mit einem Vorsprung 24 versehen sein, wie er in den Fig. 16 und 17 dargestellt ist. Der angestrebte Formschluss zwischen dem Blechteil 5 und dem Hohlprofilteil 2 kommt hierbei dadurch zustande, dass sich beim Umformungsprozess der Umfangsbereich 12 des Hohlprofilteils 2 dicht um den Vorsprung 24 herumlegt. Der Vorsprung 24 kann, wie in Fig. 16 gezeigt, dornartig spitz zulaufen oder, gemäß Fig. 17, stegartig ausgebildet sein. Er kann zudem rippenartig langgestreckt oder eher noppenartig, d. h. punktartig, ausgebildet sein.

Insbesondere können Vertiefungen 21, 22, 23 gemäß den Fig. 12 bis 15 und Vorsprünge 24 gemäß Fig. 16 und Fig. 17 in Kombination bei einem Blechteil 5 vorhanden sein. Dies wird insbesondere deutlich in Fig. 18. Hier ist in das Blechteil 5 im Bereich des Querrands 6 eine Sicke 25 eingebracht. Die Sicke 25 äußert sich auf einer Blechfläche 20 als Vorsprung 24, während sie auf der gegenüberliegenden Blechfläche 20 eine Nut 22 bildet. In Profillängsrichtung können Vorsprünge und Sicken auch beliebig oft auf der einen oder anderen Seite des Steges ausgeprägt werden.

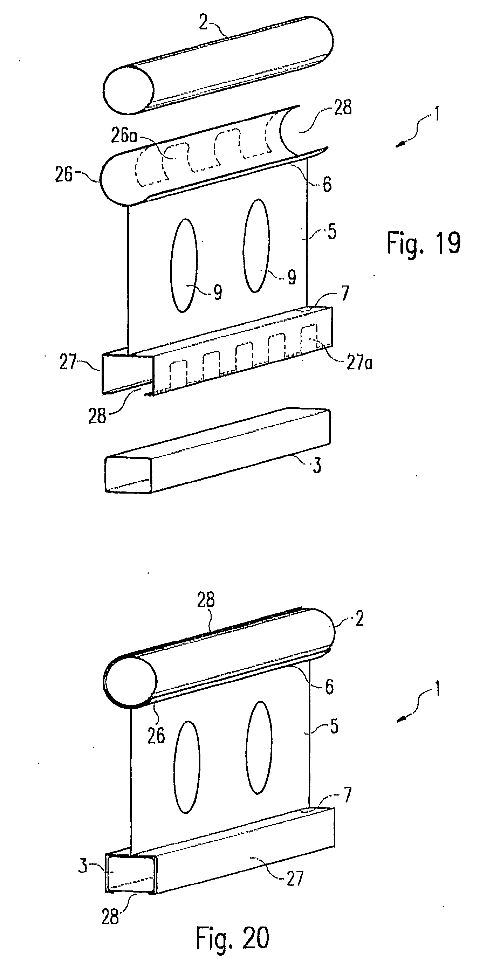

Die in den Fig. 19 und 20 gezeigte alternative Ausführungsform des Trägerbauteils 1 bildet gewissermaßen die Umkehr des konstruktiven Gedankens, der dem Trägerbauteil 1 gemäß Fig. 2 zugrunde liegt. Während dort die Querränder 6 und 7 von etwa U-förmigen Schlaufen der Hohlprofilteile 2 bzw. 3 umklammert werden, ist es gemäß Fig. 20 das Blechteil 5, das die Hohlprofilteile 2 und 3 formschlüssig mit im Querschnitt etwa U-förmigen Ausformungen 26 bzw. 27 umklammert. Optional können die Ausformungen 26 und 27 mit Aussparungen 26a bzw. 27a versehen sein (durch die gestrichelte Linie in Fig. 19 angedeutet). Dies führt zu einer Gewichtsreduzierung des Trägerbauteils 1. Der seitliche Bereich kann im Extremfall auch durch ein ganz oder partiell geschlossenes Profil gebildet werden, durch welches das einzuformende Profil geschoben wird.

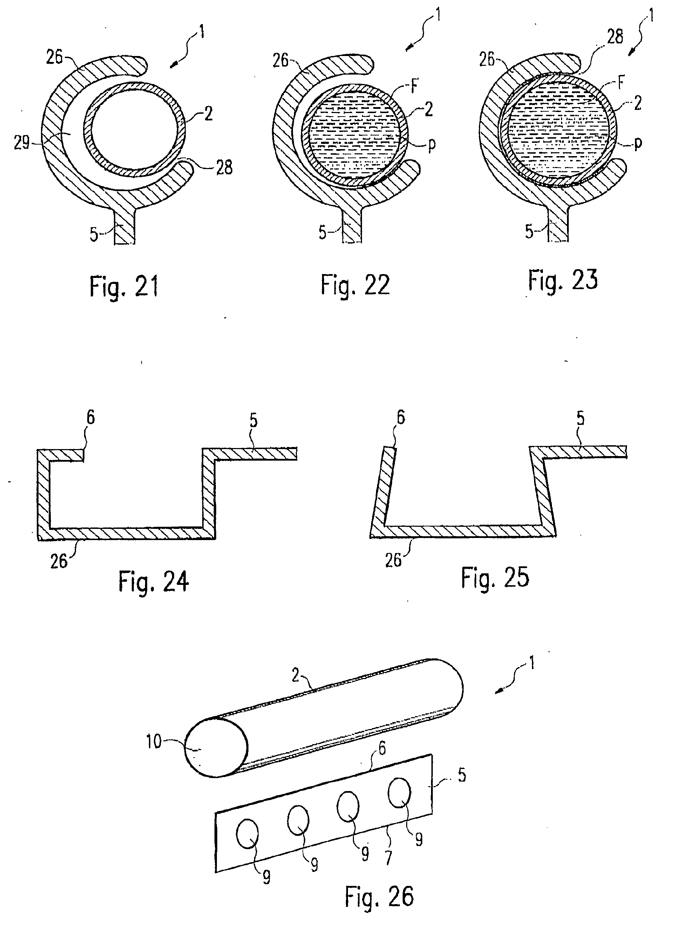

Die Ausformung 26 bzw. 27 ist am jeweiligen Querrand 6 bzw. 7 des Blechteils 5 einstückig angeformt und weist einen gerundeten oder eckigen, geöffneten Querschnitt auf. Bevorzugt ist die Form der Ausformung 26, 27 an den Querschnitt des aufzunehmenden Hohlprofilteils 2 bzw. 3 angepasst. Die zur Aufnahme des zylindrischen Hohlprofilteils 2 vorgesehene Ausformung 26 hat demnach eine Querschnittsform, die einem Kreisbogensegment entspricht, während die zur Aufnahme des etwa rechteckigen Hohlprofilteils 3 bestimmte Ausformung 27 einen rechteckigen Querschnitt aufweist. Das Ende des Profils oder der Ausformung 26, 27 kann mit wie in Fig. 12 bis 18 dargestellten Elementen versehen sein. Beispielhaft ist in Fig. 22 die Ausformung 26 mit einem geänderten Ende dargestellt.

Die Herstellung des Trägerbauteils 1 gemäß Fig. 20 wird durch Fig. 21 erläutert. Im Zuge des Herstellungsprozesses wird gemäß Fig. 21 zunächst das Hohlprofilteil 2 durch die Öffnung 28 in den von der Ausformung 26 umschlossenen Innenraum 29 eingelegt. Dies ist dadurch ermöglicht, dass das Hohlprofilteil 2 in seinem Rohzustand einen Durchmesser aufweist, der kleiner als die lichte Weite der Öffnung 28 ist. Alternativ kann der Schenkel oder die Ausformung 26 elastisch verformt sein.

Gemäß Fig. 22 wird das Hohlprofilteil 2 dann wiederum mit dem Fluid F ausgefüllt. Durch Belastung des Fluids F mit einem hydrostatischen Druck p wird nun wiederum das Hohlprofilteil 2 aufgeweitet, bis es gemäß Fig. 23 an der Innenwand der Ausformung 26 anliegt. Der Durchmesser des aufgeweiteten Hohlprofilteils 2 ist nun größer als die lichte Weite der Öffnung 28, so dass das Hohlprofilteil 2 nunmehr formschlüssig durch die Ausformung 26 gehalten ist.

Die Ausformung 26 ist einstückig an das Blechteil 5 angeformt oder stoffschlüssig mit diesem verbunden. Die Ausformung 26 auch dadurch hergestellt werden, dass gemäß Fig. 24 und 25 das Blechteil 5 im Bereich seines Querrandes 6 mit einem im Querschnitt etwa U-förmigen Falz versehen wird.

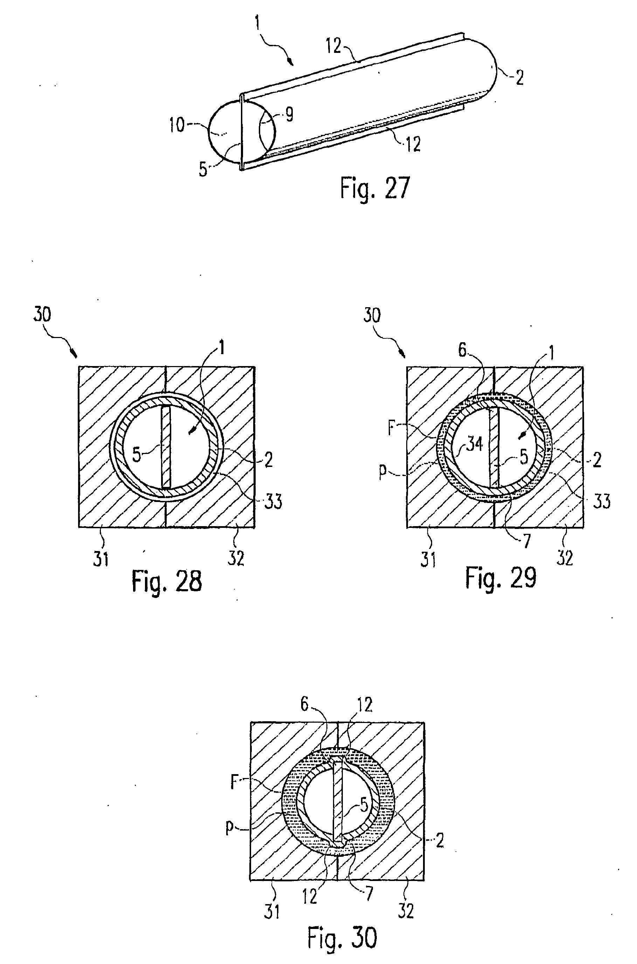

Die Fig. 26 und 27 zeigen eine dritte Ausführungsart des erfindungsgemäßen Trägerbauteils 1. Das Trägerbauteil 1 umfasst in dieser Ausführung lediglich ein einziges Hohlprofilteil 2 und das Blechteil 5, das hier die Form eines langgestreckten, gelochten Blechstreifens aufweist. Wie aus Fig. 27, die das Trägerbauteil 1 im fertigen Zustand zeigt, hervorgeht, unterscheidet sich diese dritte Ausführungsart von den vorstehend beschriebenen Varianten dadurch, dass das Blechteil 5 im Innenraum 10 des Hohlprofilteils 2 angeordnet ist. Ähnlich wie bei der Ausführungsform gemäß Fig. 2 ist das Blechteil 5 am Hohlprofilteil 2 befestigt, indem seine Querränder 6 und 7 jeweils von einem schlaufenartigen, im Querschnitt etwa U-förmigen Umfangsbereich 12 klammerartig umfasst sind. Im Unterschied zur Ausführungsform gemäß Fig. 2 taucht der Umfangsbereich 12 hier nicht in den Innenraum 10 des Hohlprofilteils 2 ein, sondern steht von dessen Außenumfang etwa radial ab. Auch hier können die Ränder wider mit Elementen nach Fig. 9 bis 14 versehen sein.

Die Herstellung des Trägerbauteils 1 gemäß Fig. 27 wird durch die Fig. 28 bis 30 näher erläutert. Im Zuge des Herstellungsprozesses wird hier gemäß Fig. 28 das Hohlprofilteil 2 mit dem darin eingeschobenen Blechteil 5 in eine Druckform 30 eingesetzt. Die Druckform 30 umfasst zwei Halbstücke 31 und 32, die zwischen sich einen Hohlraum 33 bilden. In diesem Hohlraum 33 liegt das Hohlprofilteil 2 mit Spiel ein.

Nach dem Einlegen des Hohlprofilteils 2 in die Druckform 30 wird gemäß Fig. 29 der außerhalb des Hohlprofilteils 2 befindliche Bereich des Hohlraums 33 mit dem Fluid F befüllt, so dass das Fluid F das Hohlprofilteil 2 umspült. Danach wird wiederum ein hydrostatischer Druck p auf das Fluid F appliziert. Unter Wirkung dieses Drucks p wird das Hohlprofilteil 2 zunächst etwa rotationssymmetrisch komprimiert, bis die Innenwand 34 des Hohlprofilteils 2 an den Querrändern 6 und 7 des Blechteils 5 anschlägt. Wird nun durch Aufrechterhaltung des Drucks p das Hohlprofilteil 2 weiter komprimiert, so legt sich die Wand des Hohlprofilteils 2 in dem an den jeweiligen Querrand 6 und 7 angrenzenden Umfangsbereich 12 dicht um das Blechteil 5 herum. Hierdurch bildet sich die Schlaufenform des Umfangsbereichs 12, der die kraftschlüssige oder formschlüssige Halterung des Blechteils 5 bewirkt. Ggf. wird ein Beulen nach innen durch einen geringen Gegendruck und/oder Stützkörper oder ein Elastomer verhindert. Durch entsprechende Gestaltung der Stützkörper lassen sich die Wände auch Beulstrukturieren.

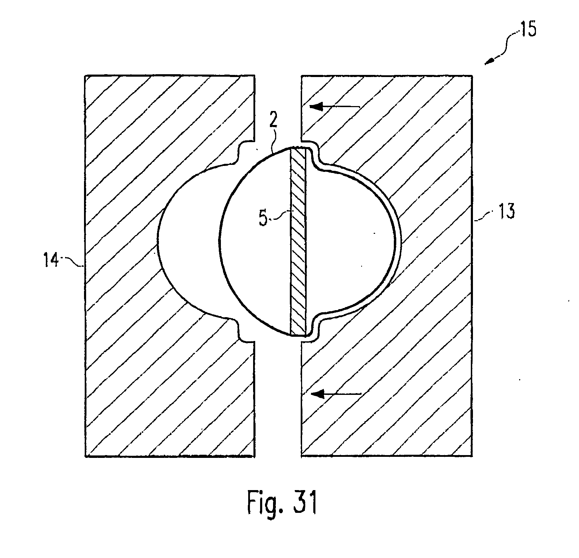

Ein alternatives Herstellungsverfahren des Trägerbauteils 1 zu dem Verfahren gemäß Fig. 28 bis 30 ist in der Fig. 31 dargestellt. Hierbei wird das Hohlprofilteil 2 mit dem darin eingeschobenen Blechteil 5 in ein Fügewerkzeug 15 zwischen zwei Halbstücke 13 und 14 eingelegt. Durch Zusammenpressen der beiden Halbstücke 13 und 14 des Fügewerkzeugs 15 wird das Trägerbauteil 1 ggf., unter Reduzierung der Materialdicke mechanisch verpresst und verformt. Dies kann idealer Weise in einem Hub oder sequenziell erfolgen. Die linke Hälfte zeigt das geöffnete Werkzeug, die rechte Seite das geschlossene Werkzeug mit dem geformten Bauteil.

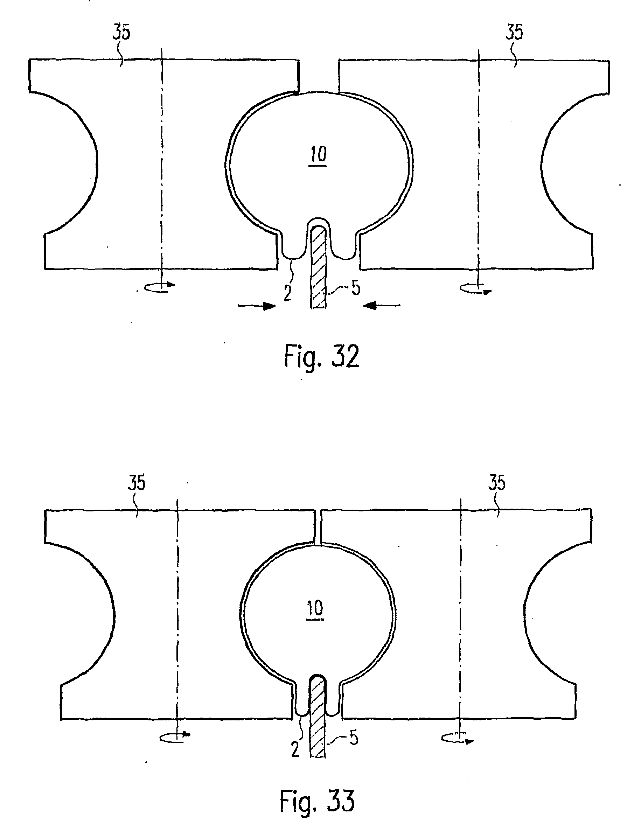

Die Fig. 32 und 33 zeigen ein weiteres alternatives Herstellungsverfahren bei welchem das Blechteil 5 in das Hohlprofilteil 2 mittels einer Walze 35 eingewalzt wird.

### Bezugszeichenliste

- 1: Trägerbauteil
- 2: Hohlprofilteil
- 3: Hohlprofilteil
- 4: Profillängsrichtung
- 5: Blechteil
- 6: Querrand
- 7: Querrand
- 8: (zentraler) Bereich
- 9: Durchbruch
- 10: Innenraum
- 11: Innenraum
- 12: Umfangsbereich
- 13: Halbstück
- 14: Halbstück
- 15: Fügewerkzeug
- 16: Hohlraum
- 17: Freiende
- 18: Blechteil
- 19: Querrand
- 20: Blechfläche
- 21: Durchbruch
- 22: Nut
- 23: Einschnitt
- 23a: Hinterschnitt
- 24: Vorsprung
- 25: Sicke
- 26: Ausformung
- 26a: Aussparung
- 27: Ausformung
- 27a: Aussparung
- 28: Öffnung
- 29: Innenraum
- 30: Druckform
- 31: Halbstück
- 32: Halbstück
- 33: Hohlraum
- 34: Innenwand
- 35: Walze

- F: Fluid
- p: Druck

## Patentansprüche

1. Trägerbauteil (1) mit mindestens einem Hohlprofilteil (2, 3) und einem fest mit diesem verbundenen Blechteil (5, 18), wobei ein Umfangsbereich (12) des Hohlprofilteils (2, 3) derart umgeformt ist, dass der Umfangsbereich (12) an einem Querrand (6, 7, 19) des Blechteils (5, 18) kraftschlüssig und/oder formschlüssig an- oder einliegt, **dadurch gekennzeichnet, dass** an jedem Querrand (6, 7, 19) des Blechteils (5, 18) ein Hohlprofilteil (2, 3) angeordnet ist.

2. Trägerbauteil (1) nach Anspruch 1, **dadurch gekennzeichnet, dass** ein zentraler Bereich (8) des Blechteils (5) zur Gewichtseinsparung mit mindestens einem Durchbruch (9) versehen ist und/oder mindestens ein weiteres Blechteil (18) vorgesehen ist, wobei das Hohlprofilteil (2) mit beiden Blechteilen (5, 18) kraft- und/oder formschlüssig verbunden ist.

3. Trägerbauteil (1) nach einem der Ansprüche 1 bis 2, **dadurch gekennzeichnet, dass** der Querrand (6, 7, 19) mit mindestens einer Vertiefung (21, 22, 23) versehen ist, in die ein Vorsprung des Hohlprofilteils (2, 3) formschlüssig eingreift.

4. Trägerbauteil (1) nach Anspruch 1, **dadurch gekennzeichnet, dass** der Umfangsbereich (12) des Hohlprofilteils (2, 3) im Querschnitt etwa U-förmig um den Querrand (6, 7, 19) herumgebogen ist.

5. Trägerbauteil (1) nach Anspruch 1, **dadurch gekennzeichnet, dass** das Hohlprofilteil (2, 3) in einer etwa U-förmigen Ausformung (26, 27) des Querrands (6, 7) einliegt.

6. Trägerbauteil (1) nach Anspruch 1 oder 2 **dadurch gekennzeichnet, dass** das Blechteil (5) im Innenraum (10) des Hohlprofilteils (2) angeordnet ist.

7. Trägerbauteil (1) nach Anspruch 3, **dadurch gekennzeichnet, dass** die Vertiefung eine in eine Blechfläche (20) eingebrachte Nut (22) ist.

8. Trägerbauteil (1) nach Anspruch 3, dass die Vertiefung mindestens ein Durchbruch (21) ist.

9. Trägerbauteil (1) nach Anspruch 3, dass die Vertiefung ein in den Querrand (6, 7) eingebrachter Einschnitt (23) ist.

10. Trägerbauteil (1) nach einem der vorhergehenden Ansprüche, **dadurch gekennzeichnet, dass** der Querrand (6, 7) mit einem Vorsprung (24) versehen ist, der formschlüssig in die Wand des Hohlprofilteils (2, 3) eingreift.

11. Trägerbauteil (1) nach Anspruch 10, **dadurch gekennzeichnet, dass** der Vorsprung (24) rippenartig oder noppenartig ausgebildet ist.

12. Trägerbauteil (1) nach Anspruch 10, **dadurch gekennzeichnet, dass** der Vorsprung (24) spitz zuläuft.

13. Trägerbauteil (1) nach einem der Ansprüche 1 bis 12, **dadurch gekennzeichnet, dass** das Blechteil (5, 18) aus Kunststoff besteht.

## Claims

1. Structural component (1) with at least one hollow section part (2, 3) and a plate part (5, 18) permanently joined thereto, wherein a circumferential region (12) of the hollow section part (2, 3) is deformed such that the circumferential region (12) bears non-positively and/or positively against a transverse edge (6, 7, 19) of the plate part (5, 18), **characterised in that** a hollow section part (2, 3) is provided at each transverse edge (6, 7, 19) of the plate part (5, 18).

2. Structural component (1) according to claim 1, **characterised in that** a central region (8) of the plate part (5) is provided with at least one opening (9) to save weight and/or **in that** at least one further plate part (18) is provided, wherein the hollow section part (2) is non-positively and/or positively joined to the two plate parts (5, 18).

3. Structural component according to claim 1 or 2, **characterised in that** the transverse edge (6, 7, 19) is provided with at least one recess (21, 22, 23) positively engaged by a projection of the hollow section part (2, 3).

4. Structural component (1) according to claim 1, **characterised in that** the circumferential region (12) of the hollow section part (2, 3) has an approximately U-shaped cross-section bent around the transverse edge (6, 7, 19).

5. Structural component (1) according to claim 1, **characterised in that** the hollow section part (2, 3) lies in an approximately U-shaped recess (26, 27) of the transverse edge (6, 7).

6. Structural component (1) according to claim 1 or 2, **characterised in that** the plate part (5) is located in the interior (10) of the hollow section part (2).

7. Structural component (1) according to claim 3, **characterised in that** the recess is a groove (22) produced in a plate surface (20).

8. Structural component (1) according to claim 3, **characterised in that** the recess is at least one opening (21).

9. Structural component (1) according to claim 3, **characterised in that** the recess is a notch (23) produced in the transverse edge (6, 7)

10. Structural component (1) according to any of the preceding claims **characterised in that** the transverse edge (6, 7) is provided with a projection (24), which positively engages the wall of the hollow section parts (2, 3).

11. Structural component (1) according to claim 10, **characterised in that** the projection (24) is designed as a fin or as a knob.

12. Structural component (1) according to claim 10, **characterised in that** the projection (24) is tapered.

13. Structural component according to any of claims 1 to 12, **characterised in that** the plate part (5, 18) is made of plastic.

## Revendications

1. Pièce de structure support (1) comprenant au moins une pièce à profil creux (2, 3) et une pièce en tôle (5, 18) reliée fixement à celle-ci, une zone circonférentielle (12) de la pièce à profil creux (2, 3) étant formée de manière telle, que la zone circonférentielle (12) s'appuie ou s'engage par action de force et / ou par complémentarité de forme sur un bord transversal (6, 17, 19) de la pièce en tôle (5, 18),
**caractérisée en ce qu'**une pièce à profil creux (2, 3) est disposée sur chaque bord transversal (6, 7, 19) de la pièce en tôle (5, 18).

2. Pièce de structure support (1) selon la revendication 1,
**caractérisée en ce qu'**une zone centrale (8) de la pièce en tôle (5) est dotée, pour gagner du poids, d'au moins une percée (9) et / ou il est prévu au moins une autre pièce en tôle (18), la pièce à profil creux (2) étant assemblée avec les deux pièces en tôle (5, 18) par action de force et / ou par complémentarité de forme.

3. Pièce de structure support (1) selon la revendication 1 ou 2, **caractérisée en ce que** le bord transversal (6, 7, 19) est doté d'au moins un évidement (21, 22, 23) dans lequel s'engage, par complémentarité de forme, une partie saillante de la pièce à profil creux (2, 3).

4. Pièce de structure support (1) selon la revendication 1,
**caractérisée en ce que** la zone circonférentielle (12) de la pièce à profil creux (2, 3) est recourbée autour du bord transversal (6, 17, 19) en ayant, en section, une forme à peu près en U.

5. Pièce de structure support (1) selon la revendication 1,
**caractérisée en ce que** la pièce à profil creux (2, 3) s'engage dans une partie (26, 27) du bord transversal (6, 7), façonnée à peu près en forme de U.

6. Pièce de structure support (1) selon la revendication 1 ou 2, **caractérisée en ce que** la pièce en tôle (5) est disposée dans l'espace intérieur (10) de la pièce à profil creux (2).

7. Pièce de structure support (1) selon la revendication 3,
**caractérisée en ce que** l'évidement est une rainure (22) réalisée dans une surface (20) de la tôle.

8. Pièce de structure support (1) selon la revendication 3,
**caractérisée en ce que** l'évidement est au moins une percée (21).

9. Pièce de structure support (1) selon la revendication 3,
**caractérisée en ce que** l'évidement est une entaille (23) effectuée dans le bord transversal (6, 7).

10. Pièce de structure support (1) selon l'une quelconque des revendications précédentes, **caractérisée en ce que** le bord transversal (6, 7) est doté d'une partie saillante (24) qui s'engage, par complémentarité de forme, dans la paroi de la pièce à profil creux (2, 3).

11. Pièce de structure support (1) selon la revendication 10,
**caractérisée en ce que** la partie saillante (24) est configurée en forme de nervure ou de téton.

12. Pièce de structure support (1) selon la revendication 10,
**caractérisée en ce que** la partie saillante (24) se termine en pointe.

13. Pièce de structure support (1) selon l'une quelconque des revendications 1 à 12, **caractérisée en ce que** la pièce en tôle (5, 18) se compose de matière plastique.
